# EUROPEAN PATENT APPLICATION

(11) **EP 1 958 824 A2**
(43) Date of publication of application: **20.08.2008**
(21) Application number: 07110225.5
(22) Date of filing: 13.06.2007
(51) Int. Cl.: B60R 11/02

(54) **Auto-return pivot system for display apparatus**

(30) Priority: 15.02.2007 CN 200710005168
(71) Applicant: Delta Electronics, Inc., Taoyuan Sien 333, Taiwan (CN)
(72) Inventor: Lin, I-Shen, 333, Gueishan Township, Taoyuan County (TW); Huang, Chin-Chu, 333, Gueishan Township, Taoyuan County (TW)
(74) Representative: Kindermann, Peter

(57) **Abstract**

An auto-return pivot system (10) for a display apparatus (108) is provided. The auto-return pivot system (10) comprises a base (101) fixed to an article (110); a pivot (102) fixed to the base (101); a support (103) pivotally mounted around the pivot (102) for supporting the display apparatus (108); a cam device (104) connected with the support to determine a stop angle (a2) and an auto-return angle (a1) between the article (110) and the support (103); and a pressure-storing device (105) connected with the cam device (104) for storing a pressure to be applied to the cam device (104) in the axial direction of the pivot (102); wherein the pressure from the pressure-storing device (105) enables the cam device (104) to drive the support (103) to automatically return to a position with the stop angle (a2) when an angle between the article (110) and the support (103) is smaller than the auto-return angle (a1).

## Description

The present invention is related to an auto-return pivot system for a display apparatus, and more particularly to an auto-return pivot system for a display screen mounted in a vehicle.

With the great progress of the information in recent years, the use of display apparatus mounted in automobiles is also popularized. Nowadays the display apparatus mounted in automobiles not only has the functions for entertainments, but also combines the traffic information system, the Global Position System (GPS), the inquiring and warning system of the state of the automobile machine parts, the real-time monitoring system of the automobile peripheral image and so on. The current display apparatus provides the drivers more driving and safe operation information and becomes an essential part of the intelligent automobile driving system in the future.

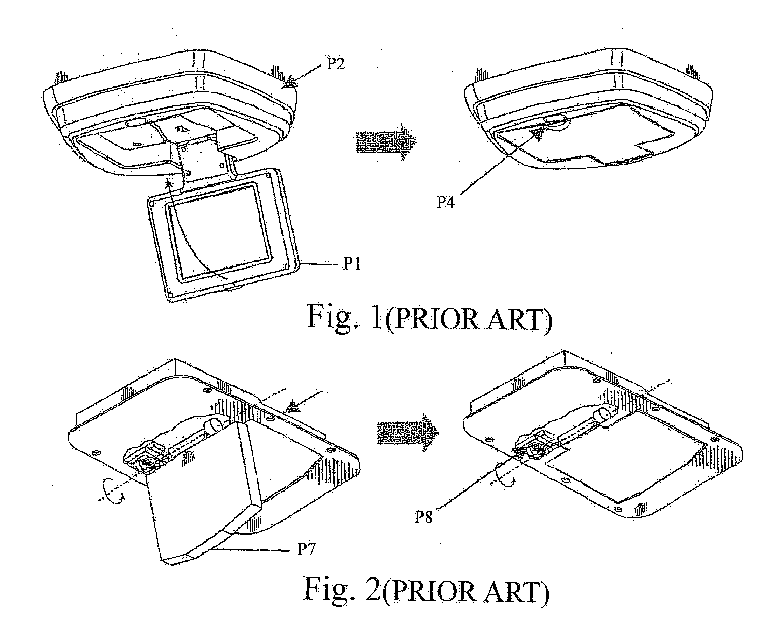

However, as to the arrangement for the position of the display apparatus mounted in automobiles, it is necessary to consider the limitation of the space inside a car, the eyeshot of the drivers and passengers, and easy operation. There are many ways for the arrangement, and a screen down-lifted from the car roof is used by many factories for its convenience of space and eyeshot, such as the US patents USD451895S and USD456371S. Nevertheless, nowadays the screen down-lifted from the car roof is designed to be opened and closed by hand operation or motor driving, and be returned to its original position by hand operation or motor driving when the use of the screen is finished. The configuration of the screen is shown in Fig. 1 and Fig. 2, respectively.

Please refer to Fig. 1, which is a diagram showing a conventional car roof display apparatus. In Fig. 1, a car roof display apparatus p1 is a display screen, which is opened and closed by hand operating by a user. When the display screen is closed, it is fixed by a fixed switching device p4 (such as a hook or a bolt) cooperated with a base p2. In this way, since it is hand-operated by a user and the fixed switching device has to be cooperated with a larger base, the entire volume of the apparatus is increased. Please refer to Fig. 2, which is a diagram showing another conventional car roof display apparatus. In Fig. 2, a car roof display apparatus p7 is opened and closed by motor driving. In this way, not only larger base space is needed for further receiving the motor driving device p8, but also the entire cost is increased.

After employing experiments and research full-heartily and persistently, the applicant finally conceived an auto-return pivot system for a display apparatus for overcoming the above-mentioned drawbacks of the display apparatus and further simplifying the operation thereof as well as decreasing the space occupied thereby.

It is an object of the present invention to provide an auto-return pivot system for a display apparatus for simplifying the operation of the display apparatus, decreasing the space occupied thereby and further reducing the cost thereof.

In accordance with one aspect of the present invention, an auto-return pivot system for a display apparatus is provided, comprising a base fixed to an article, a pivot, a support, a cam device and a pressure-storing device. The pivot is fixed to the base, the support is pivotally mounted around the pivot for supporting the display apparatus, the cam device is connected with the support to determine a stop angle and an auto-return angle between the article and the support, and the pressure-storing device is connected with the cam device for storing a pressure to be applied to the cam device in the axial direction of the pivot. When an angle between the article and the support is smaller than the auto-return angle, the pressure from the pressure-storing device enables the cam device to drive the support to automatically return to a position with the stop angle.

Preferably, the support has a pivoting shaft enabling the display apparatus to pivot in a direction different from a pivoting direction of the support.

Preferably, the cam device is a cylindrical end cam.

Preferably, the cylindrical end cam has a separable cylinder-shaped structure, which comprises a pivotable part connected with the support for pivoting around the pivot, and an unpivotable part connected with the pressure-storing device for moving along the axial direction of the pivot for receiving the pressure from the pressure-storing device.

Preferably, the pivotable part and the unpivotable part of the cylindrical end cam have ends engaging with each other.

Preferably, the respective ends of the cylindrical end cam includes at least two flat surfaces perpendicular to the axial direction of the cylinder-shaped structure, and at least one slant surface connecting the at least two flat surfaces.

Preferably, the slant surface is a curved surface.

Preferably, the cylindrical end cam drives the support to return to the position with the stop angle under continuously bearing the pressure from the pressure-storing device when the respective slant surfaces of the pivotable part and the unpivotable part are in a malposition.

Preferably, the pressure-storing device is connected with the base.

Preferably, the pressure-storing device is one selected from a group consisting of an elastic potential energy storing device, a spring, a gas pressure potential energy storing device, a magnetic potential energy storing device, an electromagnetic potential energy storing device, and a combination thereof.

Preferably, the pressure-storing device stores an energy of the pressure from an effort applied by a user.

Preferably, the display apparatus is one of a display screen and a projection apparatus.

Preferably, the display apparatus is a display screen of an automobile.

Preferably, the article fixing the base is one selected from a group consisting of a seat back, a roof in a vehicle, a horizontal structure, a ceiling, a vertical structure and a wall.

In accordance with another aspect of the present invention, an auto-return pivot system for a display apparatus is provided, comprising a pivot fixed to an article, a support pivotally mounted around the pivot for supporting the display apparatus, a pressure-storing device connected with the article, and a cam device having a pivotable part connected with the support and an unpivotable part connected with the pressure-storing device for determining a stop angle and an auto-return angle between the article and the support. The pressure-storing device provides a pressure to the unpivotable part in the axial direction of the pivot, and enables the pivotable part to drive the support to return automatically from the auto-return angle to the stop angle.

Preferably, the cam device is a cylindrical end cam.

Preferably, the pivotable part and the unpivotable part of the cylindrical end cam are separable, and the unpivotable part bears the pressure from the pressure-storing device and moves along the axial direction of the pivot while the pivotable part pivots around the pivot.

Preferably, the pivotable part and the unpivotable part of the cylindrical end cam have ends engaging with each other.

Preferably, the cam device further determines a static angle between the article and the support, and the support is static in a position with the static angle.

In accordance with a further aspect of the present invention, an auto-return pivot system for a display apparatus is provided, comprising a pivot fixed to an article, a support pivotally mounted around the pivot for supporting the display apparatus, a pressure-storing device connected with the article, and an auto-return apparatus connected with the support and the pressure-storing device for determining a stop angle and an auto-return angle between the article and the support. The pressure-storing device enables the auto-return apparatus to drive the support to automatically return to a position with the stop angle when an angle between the article and the support is smaller than the auto-return angle.

The present invention may best be understood through the following descriptions with reference to the accompanying drawings, wherein:
Fig. 1 is a diagram showing a conventional car roof display apparatus;
Fig. 2 is a diagram showing another conventional car roof display apparatus;
Figs. 3(A)-3(C) are diagrams showing an auto-return pivot system for a display apparatus according to the first embodiment of the present invention;
Figs. 4(A)-4(B) are detailed diagrams showing the detailed unpivotable part of the cam device according to the first embodiment of the present invention;
Figs. 5(A)-5(B) are detailed diagrams showing the detailed pivotable part of the cam device according to the first embodiment of the present invention;
Figs. 6(A)-6(D) are diagrams showing the operation of the auto-return pivot system according to the first embodiment of the present invention;
Figs. 7(A)-7(D) are diagrams showing the operation of the auto-return pivot system comprising a display apparatus according to the first embodiment of the present invention;
Figs. 8(A)-8(B) are detailed diagrams showing the detailed unpivotable part of the cam device according to the second embodiment of the present invention;
Figs. 9(A)-9(B) are detailed diagrams showing the detailed pivotable part of the cam device according to the second embodiment of the present invention;
Fig. 10 is a diagram showing an auto-return pivot system for a display apparatus according to the third embodiment of the present invention; and
Fig. 11 is a diagram showing an auto-return pivot system for a display apparatus according to the fourth embodiment of the present invention.

The present invention will now be described more specifically with reference to the following embodiments. It is to be noted that the following descriptions of preferred embodiments of this invention are presented herein for the purposes of illustration and description only; it is not intended to be exhaustive or to be limited to the precise form disclosed.

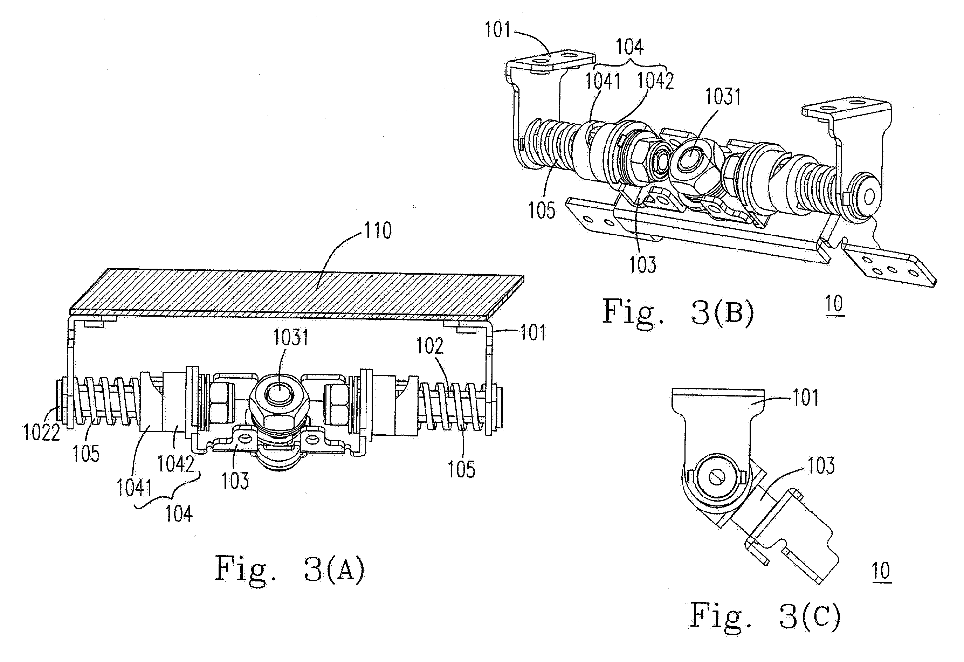

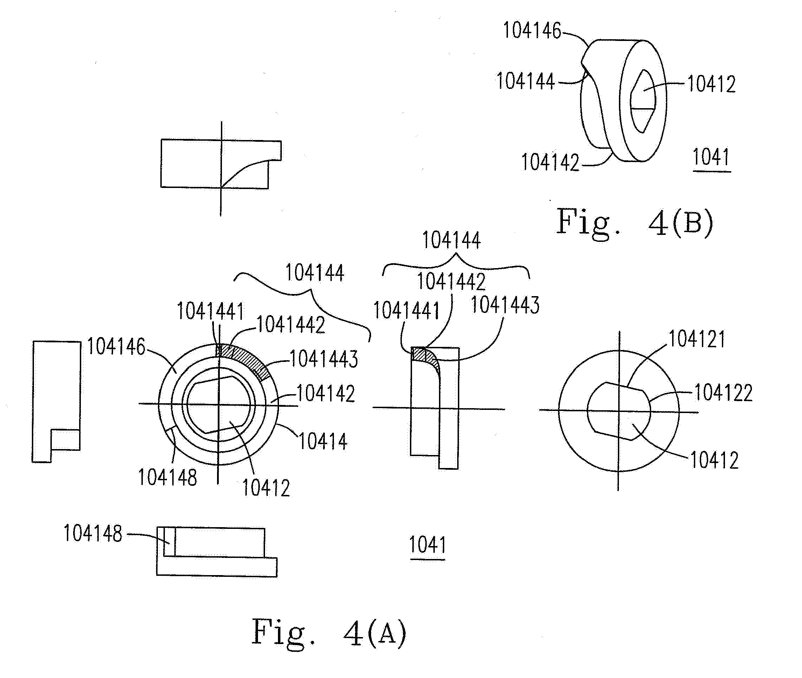

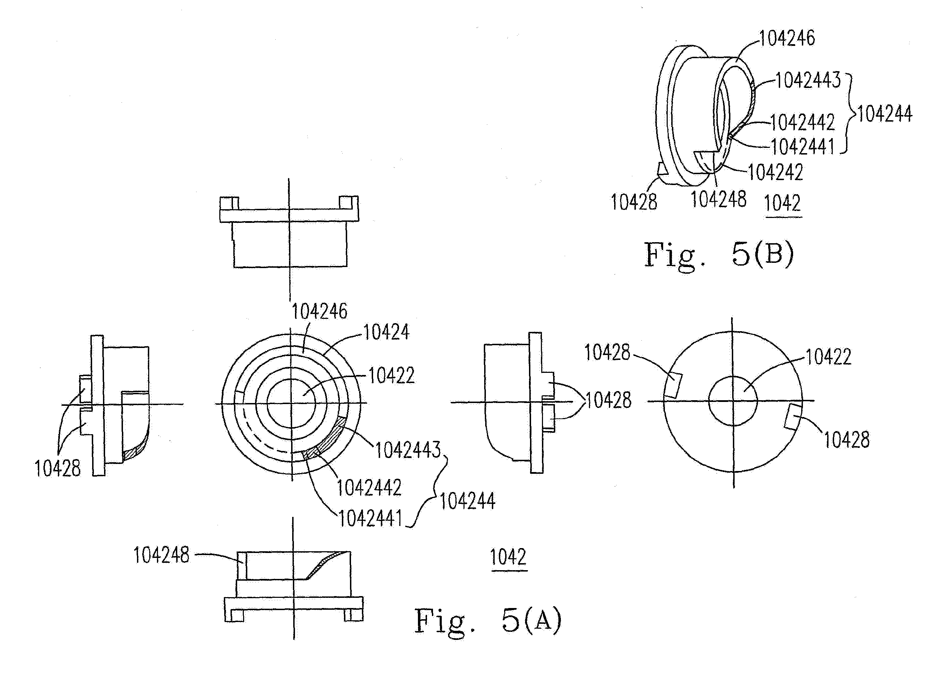

Please refer to Figs. 3(A)-3(C), showing an auto-return pivot system for a display apparatus according to the first embodiment of the present invention. In Fig. 3, an auto-return pivot system 10 for a display apparatus comprises a base 101, a pivot 102, a support 103, a cam device 104 and a pressure-storing device 105. The base 101 is fixed to an article 110 selected from a group consisting of a seat back, a roof in a vehicle, a horizontal structure, a ceiling, a vertical structure and a wall, or other equivalent articles. The pivot 102 is fixed to the base 101, and the support 103 is pivotally mounted around the pivot 102 for supporting a display apparatus thereon. The cam device 104 is a cylindrical end cam comprising two cylinder-shaped structures having ends engaging with each other, which are respectively an unpivotable part 1041 and a pivotable part 1042 connected with the support 103 to pivot around the pivot 102. The pressure-storing device 105 is a spring connected with the unpivotable part 104 of the cam device 104, and continuously provides a pressure to the unpivotable part 1041 in the axial direction of the pivot 102, so that the unpivotable part 1041 may continuously applies the pressure to the pivotable part 1042 of the cam device 104 and thus drives the pivotable part 1042 and the support 103 to automatically return to a position. The detailed configuration of the cam device 104 is shown in Figs. 4(A)-4(B) and Figs. 5(A)-5(B).

Please refer to Figs. 4(A)-4(B), which are detailed diagrams showing the unpivotable part 1041 of the cam device 104 in Figs. 3(A)-3(C). For indicating the structure more distinctly, Fig. 4(A) shows a cross-sectional view of the unpivotable part 1041 and Fig. 4(B) shows a three-dimensinal view thereof. In Figs. 4(A)-4(B), the unpivotable part 1041 is cylinder-shaped, and has a first hollow portion 10412 for the pivot 102 to pass therethrough. For the unpivotable part 1041 without pivoting around the pivot 102, the shape of the pivot 102 is designed to have two flat surfaces and two curved surfaces, and the shape of the hollow portion 10412 is designed to exactly wrap the pivot 102. As the Figs. 4(A)-4(B) show, there are two flat surfaces 104121 and two curved surfaces 104122. The exterior of the unpivotable part 1041 has a first stereoscopic end portion 10414 comprising a first end down flat surface 104142, a first end continuous curved surface 104144, a first end up flat surface 104146, and a first end vertical connecting surface 104148 between the first end down flat surface 104142 and the first end up flat surface 104146.

Please refer to Figs. 5(A)-5(B), which are detailed diagrams showing the pivotable part 1042 of the cam device 104 in Figs. 3(A)-3(C). For indicating the structure more distinctly, Fig. 5(A) shows a cross-sectional view of the pivotable part 1042 and Fig. 5(B) shows a three-dimentional view thereof. In Figs. 5(A)-5(B), the pivotable part 1042 is also cylinder-shaped, which has a circular hollow portion 10422 for the pivot 102 to pass therethrough, and the pivotable part 1042 could pivot around the pivot 102 without limitation. The exterior of the pivotable part 1042 has a second stereoscopic end portion 10424 which comprises a second end down flat surface 104242, a second end continuous curved surface 104244, a second end up flat surface 104246, and a second end vertical connecting surface 104248 between the second end down flat surface 104242 and the second end up flat surface 104246. In particular, the second stereoscopic end portion 10424 has an end shape to be exactly engaged with the first stereoscopic end portion 10414. Besides, the pivotable part 1042 further comprises a fastener device 10428 for connecting with the support 103.

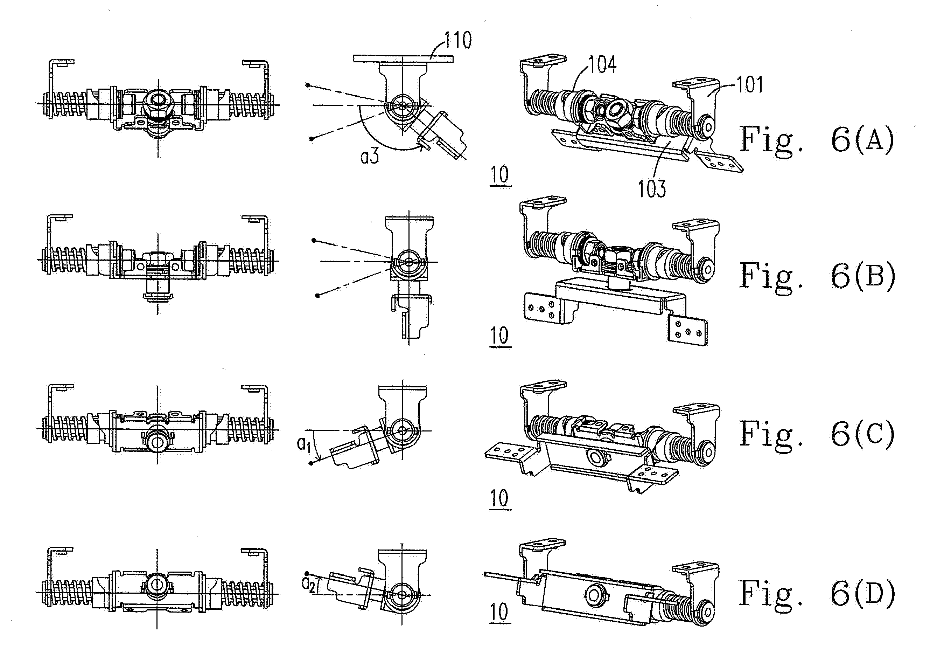

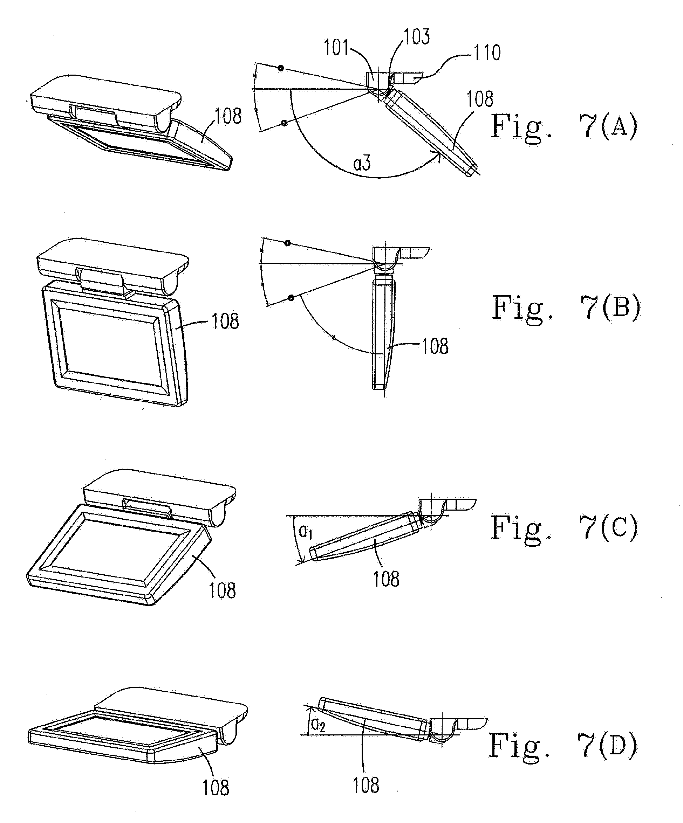

According to the above design, the operation of the auto-return pivot system according to the first embodiment of the present invention is shown in Figs. 6(A)-6(D) and Figs. 7(A)-7(D). Figs. 6(A)-6(D) are diagrams showing the operation of the auto-return pivot system in Figs. 3(A)-3(C), and Figs. 7(A)-7(D) are diagrams showing the operation of the auto-return pivot system in Figs. 3(A)-3(C) further comprising the display apparatus. For the convenience of describing the actions in the various stages, Figs. 6(A)-6(D) and Figs. 7(A)-7(D) are shown by four stages respectively, wherein Figs. 7(A), 7(B), 7(C) and 7(D) are respectively corresponding to Figs. 6(A), 6(B), 6(C) and 6(D).

Firstly, please refer to Fig. 6(A) and Fig. 7(A). There is an adjustable viewing angle a3 between the support 103 and the article 110, and at this time the first end up flat surface 104146 of the the unpivotable part 1041 and the second end up flat surface 104246 of the pivotable part 1042 of the cam device 104 are tightly in contact with each other. In the condition of keeping contact of the first end up flat surface 104146 with the second end up flat surface 104246, the support 103 and the pivotable part 1042 would be static in a position with a static angle a3, which is adjustable by a user.

After the use of the display apparatus 108, the user operates the display apparatus 108 by hand and makes it pivot toward the direction of the article 110, as shown in Fig. 6(B) and Fig. 7(B). When the angle between the support 103 and the article 110 is smaller than a given auto-return angle a1, the first end continuous curved surface 104144 of the unpivotable part 1041 and the second end continuous curved surface 104244 of the pivotable part 1042 of the cam device 104 start to contact with each other. At this time, the pivotable part 1042 bears the continuous pushing pressure from the unpivotable part 1041 exerted by the pressure spring 105, and the first end continuous curved surface 104144 and the second end continuous curved surface 104244 would continuously move comparatively, and then drive the pivotable part 1042 to pivot continuously. Therefore, the display apparatus 108 and the support 103 connected with the pivotable part 1042 would also pivot toward the direction of the article 110 automatically, as shown in Fig. 6(C) and Fig. 7(C).

When the display apparatus 108 and the support 103 are driven by the cam device 104 to pivot automatically until the first end vertical connecting surface 104148 and the second end vertical connecting surface 104248 are in contact, the automatic pivoting would stop due to the contact of the first end vertical connecting surface 104148 and the second end vertical connecting surface 104248. At this time the display apparatus 108 and the support 103 are in a stop angle a2, as shown in Fig. 6(D) and Fig.7 (D). When the user wants to open the display apparatus 108 again, he only needes to pull the display apparatus 108 and the support 103 counter to the article 110. During the return of the support 103 from the stop angle a2 to the auto-return angle a1, the effort exerted continuously by the user would be stored in the pressure-storing device 105 as a pressure energy. In other words, the pressure-storing device 105 could store the pressure energy by a user continuously applying an effort, and the pressure is released out when the support 103 automatically returns again.

In the above-mentioned embodiment, the pivot 102 and the pressure-storing device 105 can be directly fixed to the article 110, and the cam device 104 is an auto-return apparatus connected with the support 103 and the pressure-storing device 105 for determining the stop angle a2 and the auto-return angle a1. The pressure-storing device 105 enables the auto-return apparatus 104 to drive the support 103 to automatically return to a position with the stop angle a2 when an angle between the article 110 and the support 103 is smaller than the auto-return angle a1.

According to the present invention, a general person skilled in the art could adjust the respective shapes of the first stereoscopic end portion 10414 and the second stereoscopic end portion 10424 according to actual needs. In the first embodiment, the first end continuous curved surface 104144 is designed as three curved surfaces each with different slope, as the curved surfaces 1041441, 1041442 and 1041443 shown in Figs. 4(A)-4(B). The second end continuous curved surface 104244 is also designed as three curved surfaces each with different slope corresponding to the first end continuous curved surface 104144, as the curved surfaces 1042443, 1042442 and 1042441 shown in Figs. 5(A)-5(B). Such design can make the automatic pivoting of the support 103 smoother, and let the user save more effort when opening the display apparatus 108.

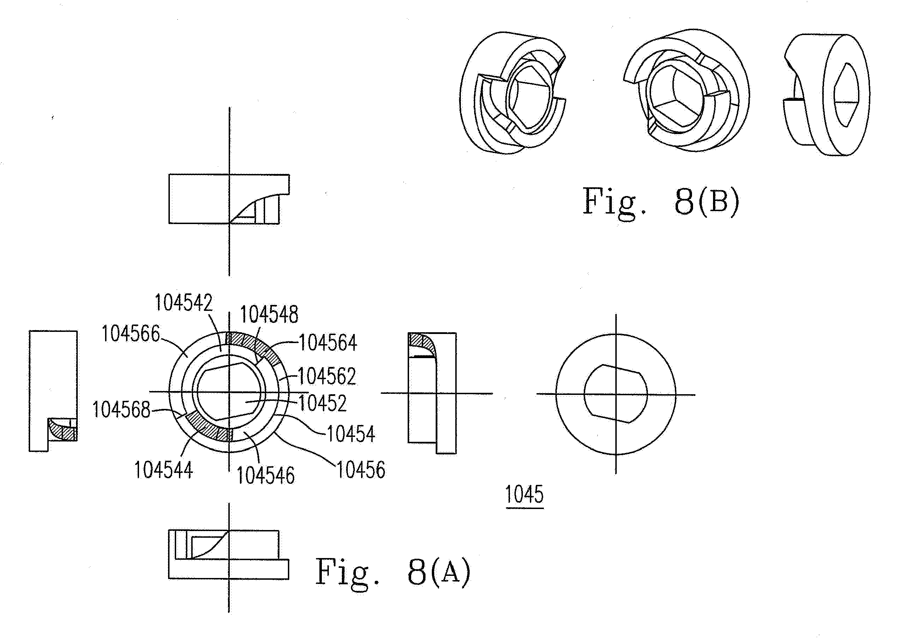

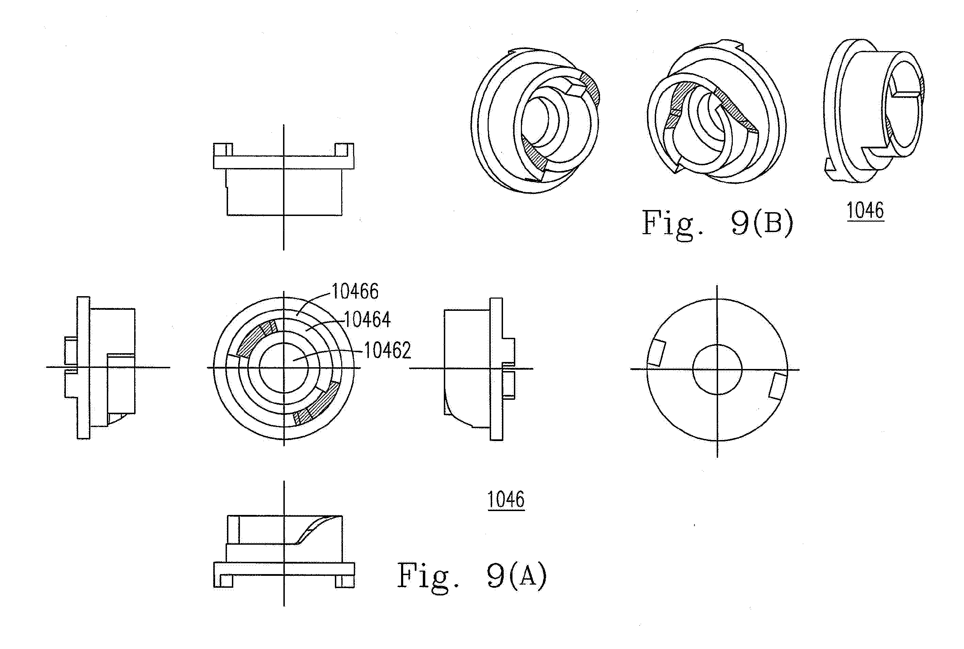

As to the adjustment of the cam device 104, the second embodiment of the auto-return pivot system for a display apparatus is provided in the present invention. The arrangement and configuration of the devices in the second embodiment are the same as those shown in Figs. 3(A)-3(C), wherein the difference only lies in the design of the cam device 104, wherein the part 1045 in Figs. 8(A)-8(B) and the part 1046 in Figs. 9(A)-9(B) respectively substitute for the unpivotable part 1041 and the pivotable part 1042 in Figs. 3(A)-3(C).

Please refer to Figs. 8(A)-8(B), which are detailed diagrams showing the unpivotable part 1045 of the cam device 104 in Figs. 3(A)-3(C). For indicating the structure more distinctly, Fig. 8(A) shows a cross-sectional view of the unpivotable part 1045 and Fig. 8(B) shows a three-dimensional view thereof. In Figs. 8(A)-8(B), the unpivotable part 1045 is cylindrical, which has a third hollow portion 10452 for the pivot 102 to pass through, and has a given shape to limit the unpivotable part 1045 without pivoting around the pivot 102 as the first embodiment. There are two end shapes surrounding the center of the cylinder, which are respectively a third end portion 10454 in the inner circle and a fourth end portion 10456 in the outer circle. The third end portion 10454 comprises a third end down flat surface 104542, a third end continuous curved surface 104544, a third end up flat surface 104546, and a third end vertical connecting surface 104548 between the third end down flat surface 104542 and the third end up flat surface 104546. The fourth end portion 10456 comprises a fourth end down flat surface 104562, a fourth end continuous curved surface 104564, a fourth end up flat surface 104566, and a fourth end vertical connecting surface 104568 between the fourth end down flat surface 104562 and the fourth end up flat surface 104566. The shapes of the third end portion 10454 and the fourth end portion 10456 are configured to have a malpositional angle space, for example, the position of the fourth end continuous curved surface 104564 has a 180 angular distance from the position of the third end continuous curved surface 104544, which is a malpositional configuration.

Please refer to Figs. 9(A)-9(B), which are detailed diagrams showing the pivotable part 1046 of the cam device 104 in Figs. 3(A)-3(C). For indicating the structure more distinctly, Fig. 9(A) shows a cross-sectional view of the pivotable part 1046 and Fig. 9(B) shows a three-dimensional view thereof. In Figs. 9(A)-9(B), the pivotable part 1046 is also cylindrical, and has a fourth hollow portion 10462 for the pivot 102 to pass through, so as to allow the pivotable part 1046 to pivot around the pivot 102 without limitation. Similarly, there are two end shapes surrounding the center of the circle, which are respectively a fifth end portion 10464 in the inner circle and a sixth end portion 10466 in the outer circle. The fifth end portion 10464 and the outer sixth end portion 10466 both have end shapes to be respectively engaged with the third end portion 10454 and the fourth end portion 10456 of the unpivotable part 1045.

By way of the above configurations of the unpivotable part 1045 and the pivotable part 1046 of the cam device 104, the support 103 of the auto-return pivot system for a display apparatus can also be operated to return automatically from an auto-return angle a1 to a stop angle a2, as shown in Figs. 6(A)-6(D) and Figs. 7(A)-7(D). Meanwhile, by means of the mentioned configurations of the two end shapes of the cam device 104, the stability of the present pivot system is enhanced and the operating effort of the user is lessend even if there is a heavier display apparatus thereon.

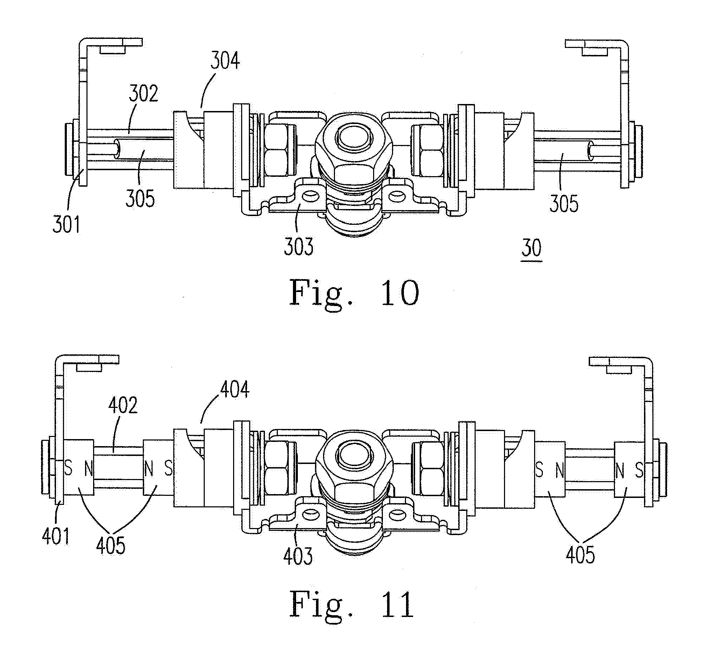

Please refer to Fig. 10, which is a diagram showing the auto-return pivot system for a display apparatus according to the third embodment of the present application. In Fig. 10, an auto-return pivot system for a display apparatus 30 comprises a base 301, a pivot 302, a support 303, a cam device 304 and a pressure-storing device 305, wherein the pressure-storing device 305 is a gas pressure storing device, which exerts a pressure to the cam device 304 along the axial direction of the pivot 302 continuously through a closed high pressure gas chamber and a moving pump, and thus drives the support 303 to return automatically from the auto-return angle a1 to the stop angle a2, as shown in Figs. 6(A)-6(D) and Figs. 7(A)-7(D).

Please refer to Fig. 11, which is a diagram showing the auto-return pivot system for a display apparatus according to the fourth embodiment of the present invention. In Fig. 11, an auto-return pivot system for a display apparatus 40 comprises a base 401, a pivot 402, a support 403, an auto-return apparatus 404 and a pressure-storing device 405, wherein the pressure-storing device 405 is a magnetic potential energy storing device, which exerts a pressure to the auto-return apparatus 404 in the axial direction of the pivot 402 continuously through a pair of repulsive magnetic media respectively connected with the base 401 and auto-return apparatus 404, and thus enables the auto-return apparatus 404 to drive the support 403 to return automatically from the given auto-return angle a1 to the stop angle a2, as shown in Figs. 6(A)-6(D) and Figs. 7(A)-7(D).

In the above-mentioned embodiments, a general person skilled in the art can adjust the configuration of the display apparatus 108 on the support 103 according to actual needs. In Figs. 3(A)-3(C), the display apparatus 108 could be disposed on the support 103 by means of a pivoting shaft 1031, while the pivoting shaft 1031 could provide the display apparatus 108 a different pivoting direction from the support 103, thereby providing the display apparatus 108 more display angles and giving the user more visual angles. Furthermore, the above pressure-storing device is exemplified as a pressure spring and a magnetic potential energy storing device, but the present invention need not be limited thereto. The pressure-storing device can also be one selected from a group consisting of an elastic potential energy storing device, a spring, a gas pressure potential energy storing device, a magnetic potential energy storing device, an electromagnetic potential energy storing device, and a combination thereof.

## Claims

1. An auto-return pivot system (10) for a display apparatus (108) comprising:
a base (101) fixed to an article (110);
a pivot (102) fixed to the base (101);
a support (103) pivotally mounted around the pivot (102) for supporting the display apparatus (108);
a cam device (104) connected with the support (103) to determine a stop angle (a2) and an auto-return angle (a1) between the article (110) and the support (103); and
a pressure-storing device (105) connected with the cam device (104) for storing a pressure to be applied to the cam device (104) in the axial direction of the pivot (102);
**characterized in that** the pressure from the pressure-storing device (105) enables the cam device (104) to drive the support (103) to automatically return to a position with the stop angle (a2) when an angle between the article (110) and the support (103) is smaller than the auto-return angle (a1).

2. An auto-return pivot system (10) according to Claim 1, **characterized in that** the support (103) has a pivoting shaft (1031) enabling the display apparatus (108) to pivot in a direction different from a pivoting direction of the support (103).

3. An auto-return pivot system (10) according to Claim 1, **characterized in that** the cam device (104) is a cylindrical end cam.

4. An auto-return pivot system (10) according to Claim 3, **characterized in that** the cylindrical end cam has a separable cylinder-shaped structure comprising:
a pivotable part (1042) connected with the support (103) for pivoting around the pivot (102); and
an unpivotable part (1041) connected with the pressure-storing device (105) for moving along the axial direction of the pivot (102) for receiving the pressure from the pressure-storing device (105).

5. An auto-return pivot system (10) according to Claim 4, **characterized in that** the pivotable part (1042) and the unpivotable part (1041) have ends engaging with each other.

6. An auto-return pivot system (10) according to Claim 5, **characterized in that** the respective ends includes at least two flat surfaces perpendicular to the axial direction of the cylinder-shaped structure, and at least one slant surface connecting the at least two flat surfaces.

7. An auto-return pivot system according (10) to Claim 6, **characterized in that** the slant surface is a curved surface.

8. An auto-return pivot system (10) according to Claim 6, **characterized in that** the cylindrical end cam drives the support (103) to return to the position with the stop angle (a2) under continuously bearing the pressure from the pressure-storing device (105) when the respective slant surfaces of the pivotable part (1042) and the unpivotable part (1041) are in a malposition.

9. An auto-return pivot system (10) according to Claim 1, **characterized in that** the pressure-storing device (105) is connected with the base (101).

10. An auto-return pivot system (10) according to Claim 1, **characterized in that** the pressure-storing device (105) is one selected from a group consisting of an elastic potential energy storing device, a spring, a gas pressure potential energy storing device, a magnetic potential energy storing device, an electromagnetic potential energy storing device, and a combination thereof.

11. An auto-return pivot system (10) according to Claim 1, **characterized in that** the pressure-storing device (105) stores an energy of the pressure from an effort applied by a user.

12. An auto-return pivot system according to Claim 1, **characterized in that** the display apparatus (108) is a display screen of an automobile.

13. An auto-return pivot system (10) according to Claim 1, **characterized in that** the article (110) is one selected from a group consisting of a seat back, a roof in a vehicle, a horizontal structure, a ceiling, a vertical structure and a wall.
